# EUROPEAN PATENT APPLICATION

(11) **EP 4 714 528 A1**
(43) Date of publication of application: **25.03.2026**
(21) Application number: 24823627.5
(22) Date of filing: 05.06.2024
(51) Int. Cl.: B01D 53/14, B01D 5/00

(54) **CARBON DIOXIDE CAPTURING APPARATUS**

(30) Priority: 12.06.2023 KR 20230074705
(71) Applicant: Panasia Co., Ltd., Busan 46744 (KR)
(72) Inventor: PARK, Jesang, Busan 46744 (KR); LEE, Sugyu, Busan 46744 (KR); PARK, Jaejeong, Busan 46744 (KR); JEONG, Min, Busan 46744 (KR); SEO, Seonghyeon, Busan 46744 (KR); CHOI, Yongki, Busan 46744 (KR)
(74) Representative: Witte, Weller & Partner Patentanwälte mbB
(86) International application number: PCT/KR2024/007728
(87) International publication number: WO 2024/258107

(57) **Abstract**

The present invention relates to a device for capturing carbon dioxide contained in exhaust gas. More specifically, it includes a pre-treatment portion for maintaining the temperature of the exhaust gas at an optimum level required for absorption in the absorption tower by washing at least a portion of the exhaust gas bled off from the scrubber with fresh water supplied from the heater of the regeneration portion, and for introducing the exhaust gas passing through said pre-treatment portion into the absorption tower, thereby enhancing the carbon dioxide capture efficiency.

## Description

### Technical Field

The present invention relates to a device for capturing carbon dioxide contained in exhaust gas. More specifically, it includes a pre-treatment portion for maintaining the temperature of the exhaust gas at an optimum level required for absorption in the absorption tower by washing at least a portion of the exhaust gas bled off from the scrubber with fresh water supplied from the heater of the regeneration portion, and for introducing the exhaust gas passing through said pre-treatment portion into the absorption tower, thereby enhancing the carbon dioxide capture efficiency.

### Background Art

In an effort to reduce acidic gases such as carbon dioxide (CO2) in exhaust emissions, various technologies have been developed, including chemical absorption, adhesion, membrane separation, and cryogenic separation. Of these, chemical absorption method that absorbs and captures CO2 using an absorbent solution has been the most widely applied due to its high efficiency and process stability.

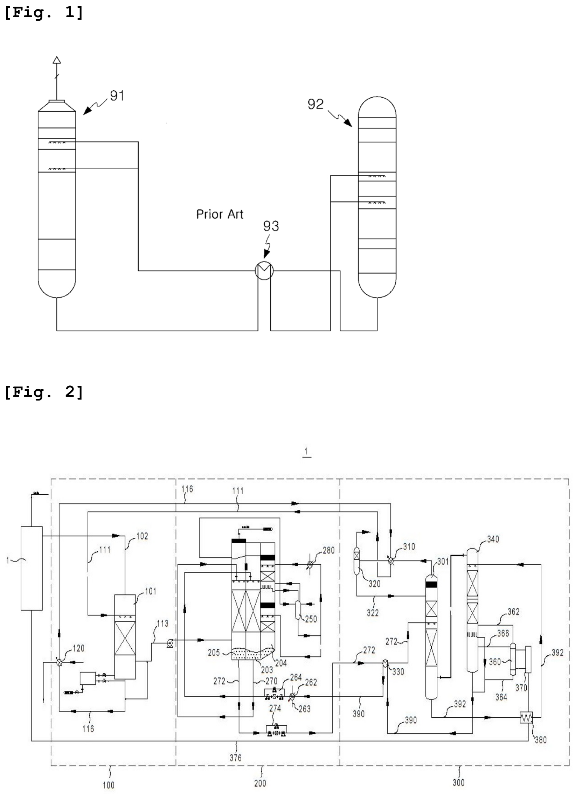

A conventional carbon dioxide capture system in FIG. 1 comprises an absorption tower 91 that removes carbon dioxide from exhaust gas by combining it with an absorbent, a heat exchanger 93 that receives the absorbent containing absorbed carbon dioxide via a pump P for heat exchange, and a regeneration tower 92 for stripping the carbon dioxide chemically bound to the heat-exchanged absorbent. Accordingly, the carbon dioxide absorption and desorption apparatus performs the carbon dioxide absorption process and the absorption liquid regeneration process (desorption process) using the above components, and the regenerated absorption liquid is re-supplied to the absorption tower 91.

At least a portion of the exhaust gas entering the absorption tower 91 is bled off from a scrubber used to reduce sulfur oxides and then supplied to the absorption tower 91. The scrubber is a device that sprays cleaning water onto exhaust gas emitted from engines of ships, etc., to remove sulfur oxides contained in the exhaust gas. In the case of ships, seawater is used as the cleaning water. Thus, at least a portion of the exhaust gas, whose sulfur oxides have been reduced by the seawater, enters the absorption tower 91. The exhaust gas entering the absorption tower is then absorbed by the absorbent sprayed there through the following chemical reaction.

When carbon dioxide is absorbed in an absorbent aqueous solution containing alkanolamine, the reaction equation is as follows.

Reaction Equation 1 CO₂ (g) ↔ CO₂ (aq) (1) CO₂ (aq) + 2H₂O ↔ HCO₃⁻+ H₃O⁺(2) HCO₃⁻ + H₂O ↔ CO₃²⁻ + H₃O⁺ (3) Amine + H₂O ↔ Amine H⁺ + OH⁻ (4) Amine H⁺ + H₂O ↔ Amine + H₃O⁺ (5) Amines + CO₂ (aq) + H₂O ↔ Amines COO⁻ + H₃O⁺ (6)

The absorption reaction described above may vary depending on the type of absorbent used, but generally exhibits optimal absorption efficiency when the ambient temperature is between 35 and 45°C. Therefore, maintaining this temperature is critically important for the carbon dioxide absorption process. However, in the case of ships, seawater is used as the cleaning water in scrubbers. The temperature of seawater varies greatly, ranging from -2 to 32° C depending on the season and region. Therefore, when ships operating in winter use such seawater as the cleaning water in their scrubbers, the exhaust gas emitted from the scrubber becomes supercooled. This fails to meet the required temperature range for the absorption reaction, leading to the problem of reducing carbon dioxide absorption efficiency.

Meanwhile, ships inherently face space constraints due to the dense arrangement of numerous devices within limited areas. Therefore, space optimization is a critical factor for equipment installed on ships. As shown in Fig. 1, conventional absorption towers installed on ships adopt the cylindrical shape of those used on land, resulting in significantly poor space efficiency. Consequently, there is a pressing need to develop technology that enhances both space efficiency and absorption efficiency.

Furthermore, as shown in Fig. 1, another critical technical issue in carbon dioxide capture devices concerns the regeneration efficiency in the regeneration tower. Unlike the absorption tower, the regeneration tower undergoes a process to separate carbon dioxide from the absorbent that has absorbed it, thereby regenerating the absorbent. This regeneration process is an endothermic reaction requiring significant energy. Thus, the energy required for absorbent regeneration accounts for a substantial portion of the total energy needed to operate the carbon capture system. For this reason, reducing regeneration energy is directly linked to the regeneration efficiency of the absorbent. Consequently, technological development to reduce regeneration energy is required to enhance the regeneration efficiency of the absorbent.
(Patent Document 1) Korean Patent Publication No. 10-2013-0002828 (2013.01.08.)
(Patent Document 2) Korean Patent Registration No. 10-1709867 (February 17, 2017)
(Patent Document 3) US Patent Registration US 9,272,241 (March 1, 2016)

### Disclosure

### Technical Problem

The present invention was devised to solve the problems of the prior art described above and has the following objectives.

An objective of the present invention is to provide a carbon dioxide capture device, the device including a pre-treatment portion capable of raising the temperature of the exhaust gas to the required temperature range in the absorption tower by heat exchange between at least a portion of the exhaust gas extracted from the scrubber and fresh water used as the cooling water for the heater in the regeneration portion, thereby enhancing the carbon dioxide absorption efficiency within the absorption tower.

Another objective of the present invention is to provide a carbon dioxide capture device, the device including a cooler for lowering the temperature of the fresh water discharged from the pre-treatment portion, providing it to the heater of the regeneration portion, lowering the temperature of the fresh water supplied to the pre-treatment portion and then preventing overheating, thereby enabling stable operation during not only winter but also summer when seawater temperatures rise and finally enhancing the carbon dioxide absorption efficiency within the absorption tower.

Another objective of the present invention is to provide a carbon dioxide capture device in which the pre-treatment portion is integrated with a scrubber to enhance carbon dioxide absorption efficiency while simultaneously optimizing space utilization or improving spatial efficiency.

Another objective of the present invention is to provide a carbon dioxide capture device, the device including a water treatment portion capable of filtering the fresh water sprayed into the pre-treatment portion, thereby increasing replacement cycle of the fresh water and preventing damage to the pre-treatment portion, heater, piping, absorbent, etc., caused by contamination of the fresh water.

Another objective of the present invention is to provide a carbon dioxide capture device with high absorption capacity relative to the same space occupancy by providing an absorption tower having a hexahedral shape with a square or rectangular cross-section and lateral section.

Another objective of the present invention is to provide a carbon dioxide capture device that can secure high absorption capacity even in a narrow space by arranging at least two or more absorption towers in a row so that they are interconnected in the transverse direction.

Another objective of the present invention is to provide a carbon dioxide capture device capable of securing high absorption capacity even in a confined space by ensuring each absorption tower possesses the most uniform carbon dioxide absorption capacity. This is achieved by configuring the device to sequentially spray the regenerated absorbent supplied from a regeneration portion into absorption towers, starting from an absorption tower located furthest from an exhaust gas inlet and progressing toward an absorption tower closest to the exhaust gas inlet.

Another objective of the present invention is to provide a carbon dioxide capture device that prevents residual absorbent droplets remaining in the exhaust gas discharged into the atmosphere after carbon dioxide removal from being emitted into the atmosphere by providing a post-treatment tower at the rear end of the absorption tower.

Another objective of the present invention is to provide a carbon dioxide capture device that prevents the discharge of absorbent droplets or fresh water droplets into the atmosphere by placing a condensation chamber at the top of an absorption tower and a post-treatment tower and then allowing any droplets that may occur during the cleaning process in the post-treatment tower to condense.

Another objective of the present invention is to provide a carbon dioxide capture device that enhances carbon dioxide absorption efficiency by installing partition walls between two or more absorption towers, allowing mutual communication between the towers, thereby guiding exhaust gas flow in a desired direction.

Another objective of the present invention is to provide a carbon dioxide capture device that enhances carbon dioxide absorption efficiency by maintaining the absorbent concentration at a desired level in each absorption tower. This is achieved by equipping a demister in a passage formed in the partition wall between absorption towers, thereby blocking the movement of absorbent or water vapor droplets to adjacent absorption towers.

Another objective of the present invention is to provide a carbon dioxide capture device that enhances absorption efficiency by opening a lower portion of the partition wall between the absorption tower furthest from the exhaust gas inlet and the post-treatment tower installed at the rear end of the absorption tower, thereby enabling mutual sharing of storage space to maintain the absorbent concentration at a desired level.

Another objective of the present invention is to provide a carbon dioxide capture device, the device being configured such that the buffer tank's cleaning water is sprayed into the lower and upper sections of the post- treatment tower, respectively and the cleaning water sprayed into the upper section returns to the buffer tank, while the cleaning water sprayed into the lower section does not return to the buffer tank but is supplied to the storage space of an adjacent absorption tower to adjust the absorbent concentration to the desired level, thereby continuously maintaining and enhancing absorption efficiency.

Another objective of the present invention is to provide a carbon dioxide capture device that includes a filter in the inlet line through which the absorbent supplied from the regeneration portion flows to remove impurities such as salts and dust contained in the absorbent, thereby preventing damage to the components of the absorption portion and enhancing the absorption efficiency of carbon dioxide.

Another objective of the present invention is to provide a carbon dioxide capture device that enhances carbon dioxide absorption efficiency by maintaining the absorbent concentration at a desired level in each absorption tower. This is achieved by equipping a demister in a passage formed in the partition wall between absorption towers, thereby blocking the movement of absorbent or water vapor droplets to adjacent absorption towers.

Another objective of the present invention is to provide a carbon dioxide capture device that enhances absorption efficiency by opening a lower portion of the partition wall between the absorption tower furthest from the exhaust gas inlet and the post-treatment tower installed at the rear end of the absorption tower, thereby enabling mutual sharing of storage space to maintain the absorbent concentration at a desired level.

Another objective of the present invention is to provide a carbon dioxide capture device, the device being configured that the buffer tank's cleaning water is sprayed into the lower and upper sections of the post- treatment tower, respectively and the cleaning water sprayed into the upper section returns to the buffer tank, while the cleaning water sprayed into the lower section does not return to the buffer tank but is supplied to the storage space of an adjacent absorption tower to adjust the absorbent concentration to the desired level, thereby continuously maintaining and enhancing absorption efficiency.

Another objective of the present invention is to provide a carbon dioxide capture device that includes a filter in the inlet line through which the absorbent supplied from the regeneration portion flows to remove impurities such as salts and dust contained in the absorbent, thereby preventing damage to the components of the absorption portion and enhancing the absorption efficiency of carbon dioxide.

Another objective of the present invention is to provide a carbon dioxide capture device by providing a cooler in the inlet line where the regenerated absorbent is supplied in order to cool the temperature of the absorbent supplied from the regeneration portion to the optimal temperature range for the absorption reaction and then feed the regenerated absorbent into the absorption tower, thereby enhancing absorption efficiency.

Another objective of the present invention is to provide a carbon dioxide capture device by providing a filter in the outlet line through which the absorbent discharged after absorbing carbon dioxide in the absorption tower, flows, thereby removing impurities such as salts and dust remaining on the absorbent before the absorbent is fed into the regeneration tower and enhancing regeneration efficiency.

Another objective of the present invention is to provide a carbon dioxide capture device, the device including a heater allowing the absorbent discharged from the regeneration tower where the absorbent discharged from the absorption portion first enters, to exchange heat with the exhaust gas discharged from a steam boiler, and a heating boiler that heats the absorbent through heat exchange between the absorbent and the steam, thereby reducing regeneration energy consumption and increasing regeneration efficiency.

Another objective of the present invention is to provide a carbon dioxide capture device, the device including a heater at the intersection point of the outlet line through which the absorbent, which has absorbed carbon dioxide in the absorption tower and is finally discharged, flows, and the outlet line through which the regenerated absorbent is discharged, thereby raising the temperature of the absorbent entering the regeneration tower and reducing regeneration energy consumption and increasing regeneration efficiency.

Another objective of the present invention is to provide a carbon dioxide capture device, the device including a heater allowing the gas composed of carbon dioxide and water vapor discharged from the regeneration tower to exchange heat with the fresh water in the pre-treatment portion, thereby raising the temperature of the fresh water by utilizing waste heat from the gas and warming the exhaust gas entering the absorption tower and then enhancing absorption efficiency in the absorption tower.

### Technical Solution

The present invention is realized by an embodiment having the following configuration to achieve the above objectives.

According to an embodiment of the present invention, a carbon dioxide capture device includes an absorption tower absorbing carbon dioxide from at least a portion of the exhaust gas bled off from a scrubber, and a regeneration portion regenerating the absorbent discharged from the absorption portion, wherein the device further includes a pre-treatment portion between the scrubber and the absorption portion, and the exhaust gas extracted from the scrubber is introduced into the pre-treatment portion, adjusted to a predetermined temperature required by the absorption portion, and then introduced into the absorption portion.

According to another embodiment of the present invention, the pre-treatment portion raises the temperature of the exhaust gas to a predetermined temperature required in the absorption portion by heat exchange between the liquid of the heater of the regeneration portion and the exhaust gas.

According to another embodiment of the present invention, the pre-treatment portion includes a pre-treatment tower configured to be interconnected with an inlet line into which liquid discharged from heater of the regeneration portion is introduced, an inlet line into which exhaust gas partially bled off from the scrubber is introduced, an outlet line from which liquid discharged from the pre-treatment portion is discharged, and an outlet line from which the exhaust gas is discharged.

According to another embodiment of the present invention, the outlet line of the exhaust gas of the pre-treatment portion is configured to be interconnected with the absorption portion and and a blower is installed to the outlet line 113 of the exhaust gas, forcibly providing the exhaust gas within the pre-treatment tower.

According to another embodiment of the present invention, the pre-treatment portion further includes a nozzle capable of spraying the liquid in the heater that is introduced to the pretreatment portion into the exhaust gas, thereby raising the temperature of the exhaust gas through contact between the liquid sprayed from the nozzle and the exhaust gas.

According to another embodiment of the present invention, the liquid outlet line and the liquid inlet line are fluidically connected to the heater of the regeneration portion, thereby forming a closed circuit such that the liquid introduced into the pretreatment portion is returned to the heater.

According to another embodiment of the present invention, the liquid outlet line further includes a heat exchanger, the temperature of the liquid being cooled to a predetermined temperature through heat exchange between seawater and the liquid in the heat exchanger before being inflowed into the heater.

According to another embodiment of the present invention, a water treatment portion is configured to form a closed loop with the storage space, the water treatment portion removing impurities contained in the liquid stored in the storage space and supplying the filtered liquid to the heater.

According to another embodiment of the present invention, the pre-treatment tower is integrally formed with the scrubber.

According to another embodiment of the present invention, the post-treatment tower and the absorption tower are spatially separated by a partition wall but share a storage space where the absorbent is stored.

According to another embodiment of the present invention, the absorption tower has a hexahedral shape with a cross-sectional and lateral section selected from a group consisting of square and rectangular shapes.

According to another embodiment of the present invention, the absorption tower comprises at least two absorption towers, and the at least two absorption towers are consecutively arranged in a transverse direction and interconnected to allow exhaust gas to flow therethrough.

According to another embodiment of the present invention, the absorption portion further includes a post-treatment tower interconnected with the absorption tower at the rear end of the absorption tower, and the exhaust gas discharged from the absorption tower is introduced into the post-treatment tower to remove absorbent droplet and water vapor contained in the exhaust gas.

According to another embodiment of the present invention, the device further includes a condensation chamber at the rear end of the post-treatment tower such that the exhaust gas stays inside the chamber for a certain period of time, the condensation chamber being formed as a hexahedral space extending transversely across the upper portions of the absorption tower and the post- treatment tower.

According to another embodiment of the present invention, the regeneration portion includes a regeneration tower into which the absorbent discharged from the absorption portion is first introduced, and other regeneration tower into which the absorbent discharged from the regeneration tower is introduced.

According to another embodiment of the present invention, wherein the other regeneration tower is in fluid connection to the regeneration tower into which the absorbent is first introduced such that the absorbent discharged from the other regeneration tower is supplied to the absorption portion and the carbon dioxide separated from the other regeneration tower is supplied to the regeneration tower into which the absorbent is first introduced;
the outlet line through which the absorbent discharged from the absorption portion flows to the regeneration tower into which the absorbent is first introduced being configured to be in fluid connection to the other regeneration tower; and
a heater being provided in the outlet line for raising the temperature of the absorbent through heat exchange between the combustion gas from a steam boiler and the absorbent.

According to another embodiment of the present invention, the other regeneration tower consists of a desorbing zone where carbon dioxide is stripped by spraying the absorbent discharged from the regeneration tower into which the absorbent discharged from the absorption portion is first introduced the discharged absorbent, and a storage zone where the carbon dioxide-stripped absorbent is retrieved and stored; the storage zone being fluidically connected to the absorption portion;
the regeneration portion further comprising a heating boiler fluidically connected to the storage zone and the stripping zone, retrieving and reheating the absorbent discharged from the desorbing zone, supplying the gas containing carbon dioxide to the desorbing zone, and then supplying the absorbent back to the storage zone; and
the heating boiler providing heat exchange between steam produced by the steam boiler with the absorbent retrieved from the stripping zone.

### Advantageous Effects

The present invention provides the following effects.

The present invention provides a carbon dioxide capture device, the device including a pre-treatment portion capable of raising the temperature of the exhaust gas to the required temperature range in the absorption tower by heat exchange between at least a portion of the exhaust gas extracted from the scrubber and fresh water used as the cooling water for the heater in the regeneration portion, thereby enhancing the carbon dioxide absorption efficiency within the absorption tower.

The present invention provides a carbon dioxide capture device, the device including a cooler lowering the temperature of the fresh water discharged from the pre-treatment portion, providing it to the heater of the regeneration portion, lowering the temperature of the fresh water supplied to the pre-treatment portion and then preventing overheating, thereby enabling stable operation during not only winter but also summer when seawater temperatures rise and finally enhancing the carbon dioxide absorption efficiency within the absorption tower.

The present invention provides a carbon dioxide capture device that the pre-treatment portion is integrated with a scrubber to enhance carbon dioxide absorption efficiency while simultaneously optimizing space utilization or improving spatial efficiency.

The present invention provides a carbon dioxide capture device, the device including a water treatment portion capable of filtering the fresh water sprayed into the pre-treatment portion, thereby increasing replacement cycle of the fresh water and preventing damage to the pre-treatment portion, heater, piping, absorbent, etc., caused by contamination of the fresh water.

The present invention provides a carbon dioxide capture device with high absorption capacity relative to the same space occupancy by providing an absorption tower having a hexahedral shape with a square or rectangular cross-section and side section.

The present invention provides a carbon dioxide capture device that can secure high absorption capacity even in a narrow space by arranging at least two or more absorption towers in a row so that they are interconnected in the transverse direction.

The present invention provides a carbon dioxide capture device capable of securing high absorption capacity even in a confined space by ensuring each absorption tower possesses the most uniform carbon dioxide absorption capacity. This is achieved by configuring the device to sequentially spray the regenerated absorbent supplied from a regeneration portion into absorption towers, starting from an absorption tower located furthest from an exhaust gas inlet and progressing toward an absorption tower closest to the exhaust gas inlet.

The present invention provides a carbon dioxide capture device that prevents residual absorbent droplets remaining in the exhaust gas discharged into the atmosphere after carbon dioxide removal from being emitted into the atmosphere by providing a post-treatment tower at the rear end of the absorption tower.

The present invention provides a carbon dioxide capture device that prevents the discharge of absorbent droplets or fresh water droplets into the atmosphere by placing a condensation chamber at the top of an absorption tower and a post-treatment tower and then allowing any droplets that may occur during the cleaning process in the post-treatment tower to condense.

The present invention provides a carbon dioxide capture device that enhances carbon dioxide absorption efficiency by installing partition walls between at least two absorption towers, allowing mutual communication between the towers, thereby guiding exhaust gas flow in a desired direction.

The present invention provides a carbon dioxide capture device that enhances carbon dioxide absorption efficiency by maintaining the absorbent concentration at a desired level in each absorption tower. This is achieved by equipping a demister in a passage formed in the partition wall between absorption towers, thereby blocking the movement of absorbent or water vapor droplets to adjacent absorption towers.

The present invention provides a carbon dioxide capture device that enhances absorption efficiency by opening a lower portion of the partition wall between the absorption tower furthest from the exhaust gas inlet and the post-treatment tower installed at the rear end of the absorption tower, thereby enabling mutual sharing of storage space to maintain the absorbent concentration at a desired level.

The present invention provides a carbon dioxide capture device, the device being configured that the buffer tank's cleaning water is sprayed into the lower and upper sections of the post- treatment tower, respectively and the cleaning water sprayed into the upper section returns to the buffer tank, while the cleaning water sprayed into the lower section does not return to the buffer tank but is supplied to the storage space of an adjacent absorption tower to adjust the absorbent concentration to the desired level, thereby continuously maintaining and enhancing absorption efficiency.

The present invention provides a carbon dioxide capture device that includes a filter in the inlet line through which the absorbent supplied from the regeneration portion flows to remove impurities such as salts, etc. and dust contained in the absorbent, thereby preventing damage to the components of the absorption portion and enhancing the absorption efficiency of carbon dioxide.

The present invention provides a carbon dioxide capture device by providing a cooler in the inlet line where the regenerated absorbent is supplied in order to cool the temperature of the absorbent supplied from the regeneration portion to the optimal temperature range for the absorption reaction and then feed the regenerated absorbent into the absorption tower, thereby enhancing absorption efficiency.

The present invention provides a carbon dioxide capture device by providing a filter in the outlet line through which the absorbent discharged after absorbing carbon dioxide in the absorption tower, flows, thereby removing impurities such as salts and dust remaining on the absorbent before the absorbent is fed into the regeneration tower and enhancing regeneration efficiency.

The present invention provides a carbon dioxide capture device, the device including a heater allowing the absorbent discharged from the regeneration tower where the absorbent discharged from the absorption portion first enters, to exchange heat with the exhaust gas discharged from a steam boiler, and a heating boiler heating the absorbent through heat exchange between the absorbent and the steam, thereby reducing regeneration energy consumption and increasing regeneration efficiency.

The present invention provides a carbon dioxide capture device, the device including a heater at the intersection point of the outlet line through which the absorbent, which has absorbed carbon dioxide in the absorption tower and is finally discharged, flows, and the outlet line through which the regenerated absorbent is discharged, thereby raising the temperature of the absorbent entering the regeneration tower and reducing regeneration energy consumption and increasing regeneration efficiency.

The present invention provides a carbon dioxide capture device, the device including a heater allowing the gas composed of carbon dioxide and water vapor discharged from the regeneration tower to exchange heat with the fresh water in the pre-treatment portion, thereby raising the temperature of the fresh water by utilizing waste heat from the gas and warming the exhaust gas entering the absorption tower and then enhancing absorption efficiency in the absorption tower.

### Description of the Drawings

Fig. 1 is a view illustrating a conventional carbon dioxide capture device.
Fig. 2 is a view illustrating a carbon dioxide capture device according to an embodiment of the present invention.
Fig. 3 is a perspective view of a scrubber with a pre-treatment portion shown in Fig. 2.
Fig. 4 is a view illustrating the pre-treatment portion shown in Fig. 2.
Fig. 5 is a perspective view of an absorption tower shown in Fig. 2.
Fig. 6 is a front view of an absorption tower shown in Fig. 2.
Fig. 7a is a side view of an absorption tower shown in Fig. 2.
Fig. 7b is a plan view of an absorption tower shown in Fig. 2.
Fig.8a is a view illustrating an absorption portion shown in Fig. 2.
Fig.8b is a view illustrating a post-treatment tower shown in Fig. 8a.
Fig. 9 is an enlarged view of a chimney tray shown in Fig. 2.
Fig.10 is an enlarged view of a condensation chamber shown in Fig. 2.
Fig. 11 is a view of a regeneration portion shown in Fig. 2.
Fig. 12 is a view of a regeneration portion of the carbon dioxide capture device according to another embodiment of the present invention.
Fig. 13 is a view of a carbon dioxide capture device, comprising a pre-treatment portion, one absorption tower, and a regeneration portion, according to another embodiment of the present invention.
Fig. 14 is a view of a carbon dioxide capture device comprising a pre-treatment portion, one absorption tower, one post-treatment tower, and a regeneration portion, according to another embodiment of the present inventio.
Fig. 15 is a view of a carbon dioxide capture device comprising a pre-treatment portion, three absorption towers, one post-treatment tower, and a regeneration portion, according to another embodiment of the present invention.
Fig. 16 is a view of a carbon dioxide capture device comprising two absorption towers, one post-treatment tower, and a regeneration portion, according to another embodiment of the present invention.
Fig. 17 is a view of a carbon dioxide capture device comprising three absorption towers, one post-treatment tower, and a regeneration portion, according to another embodiment of the present invention.
Fig. 18 is a view of a carbon dioxide capture device comprising four absorption towers, one post-treatment tower, and a regeneration portion, according to another embodiment of the present invention.
Fig. 19 is a view of a carbon dioxide capture device comprising two absorption towers and a regeneration portion, according to another embodiment of the present invention.
Fig. 20 is a view of a carbon dioxide capture device comprising three absorption towers and a regeneration portion, according to another embodiment of the present invention.
Fig. 21 is a view of a carbon dioxide capture device comprising four absorption towers and a regeneration portion, according to another embodiment of the present invention.

### Best Mode

The applicant will now describe the embodiments described above in detail with reference to the drawings.

Fig.2 is a view of a carbon dioxide capture device according to one embodiment of the present invention. Exhaust gases emitted from a ship's engine contain substances that cause environmental pollution, such as sulfur oxides and carbon dioxide. The exhaust gas containing these substances that cause environmental pollution is sent to a sulfur oxide reduction device called a scrubber. After sulfur oxides are reduced within this device, the exhaust gas is discharged into the atmosphere. However, since the exhaust gas with reduced sulfur oxides still contains carbon dioxide, at least a portion of the exhaust gas passing through the scrubber is not directly released into the atmosphere and bled off and sent to the carbon dioxide capture device 1 of the present invention. This device captures the carbon dioxide contained in the exhaust gas, and the exhaust gas with removed or reduced carbon dioxide is then released into the atmosphere.

Referring to Fig. 2, the carbon dioxide capture device 1 of the present invention comprises a pre-treatment portion 100 that bleeds off at least a portion of the exhaust gas discharged from the scrubber 10 as a side stream and heats it to a predetermined temperature, an absorption portion 200 that sprays an absorbent onto the heated exhaust gas from the pre-treatment 100 to absorb the carbon dioxide in the exhaust gas, and a regeneration 300 that receives the absorbent having absorbed carbon dioxide from the absorption portion 200, desorbs the carbon dioxide from the absorbent and then returns the absorbent to the absorption portion.

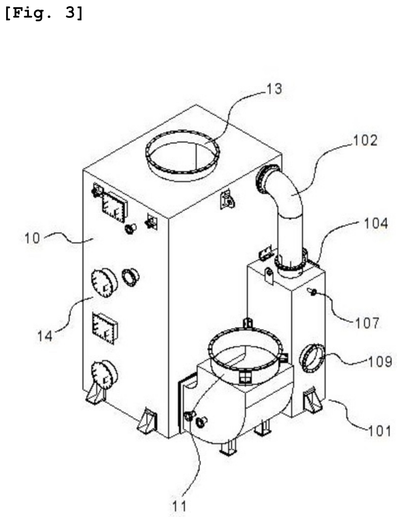

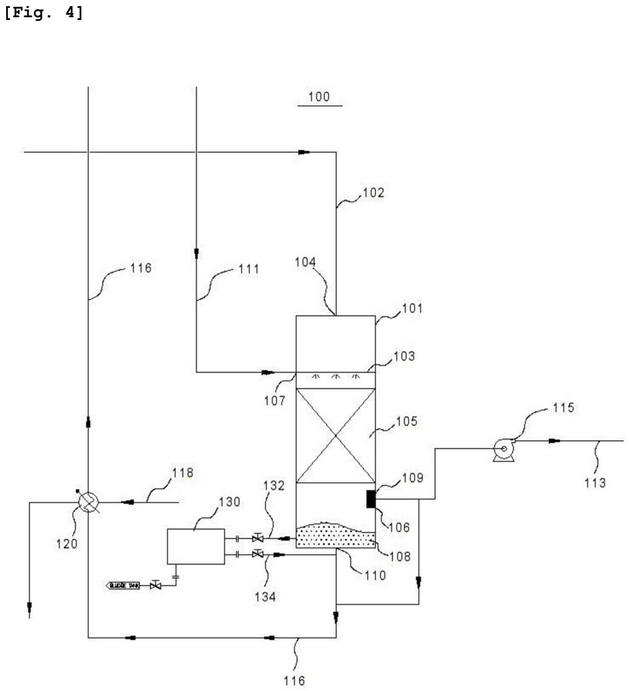

Fig.3 is a perspective view of the scrubber with the pre-treatment portion shown in Fig.2, and Fig.4 is a view of the pre-treatment portion shown in Fig.2. The pre-treatment portion 100 comprises a pre-treatment tower 101 into which at least a portion of the exhaust gas bled off from the scrubber 10 is introduced, an exhaust gas inlet line 102 in fluid connection with the pre-treatment tower, an inlet line 111 into which fresh water flows, an outlet line 113 to which an exhaust gas is discharged, an outlet line 116 to which fresh water is discharged, a water treatment portion 130 for purifying contaminated fresh water, a heat exchanger 120 installed on the outlet line 116 of the fresh water, and a blower 115 installed on the outlet line 113 of the exhaust gas.

The pre-treatment tower 101 is a space where at least a portion of the exhaust gas bled off from the scrubber 10 is cleaned by fresh water, and it has an overall rectangular parallelepiped or cube shape. The rectangular parallelepiped or cube shape ensures maximum space efficiency within the constrained environment of a ship that lacks space. For this reason, it is also desirable for the scrubber 10 to have a cube or rectangular parallelepiped shape, similar to the pre-treatment tower. The scrubber 10 comprises an inlet 11 where exhaust gas discharged from the engine enters, a body 14 where scrubbing action occurs to reduce sulfur oxides by spraying a cleaning liquid such as seawater into the introduced exhaust gas, and an outlet 13 where the exhaust gas with reduced sulfur oxides is discharged, as shown in Fig. 3. The present invention partially bleeds off a portion of the exhaust gas with reduced sulfur oxide and supplies it to a pre-treatment tower 101 just before it is discharged through the outlet 13. The pre-treatment tower 101 extracts a portion of the exhaust gas through an inlet line 102 in fluid connection with the top of the body 14 and the pre-treatment tower. As shown in Fig.3, it is desirable for the pre-treatment tower 101 to be integrally provided with the scrubber while extracting exhaust gas sideways via the inlet line 102. This integrated configuration eliminates the need for additional piping, which is advantageous in the confined space of a ship. The advantage is that the pre-treatment tower can be installed efficiently within the narrow space of a ship, and furthermore, a larger pre-treatment tower can be installed to extract and process more exhaust gas within the same space.

The pre-treatment tower 101 includes an exhaust gas inlet 104, a fresh water inlet 107, a nozzle 103, packing 105, a storage space 108, a fresh water outlet 110, an exhaust gas outlet 109, and a demister 106.

The inlet 104 is in fluid connection with the inlet line 102 to allow exhaust gas extracted from the scrubber to be introduced.

The inlet 107 is in fluid connection with the inlet line 111 through which fresh water stored in a predetermined amount in the storage space 108, returns in a heated state after heat exchange in the heater 330 of the regeneration portion described later.

The nozzle 103 is configured to spray the fresh water flowing into the inlet 107 in the direction of gravity toward the storage space 108.

The packing 105 is a stacked structure positioned on the lower side of the nozzle, allowing sprayed fresh water to adhere to the surface and stay for a predetermined time. This increases the contact time and contact area with the exhaust gas, raising its temperature through heat exchange and maximizing the removal of impurities. The temperature of seawater used in the scrubber 10 to reduce sulfur oxides is relatively low in winter, typically ranging from -2 to 15°C depending on the region. Consequently, exhaust gases discharged from the scrubber during winter are supercooled and emitted at approximately 10 to 25°C. However, this temperature range is lower than the 35 to 45°C required for the carbon dioxide absorption reaction in the absorption tower. Consequently, during winter, the carbon dioxide absorption rate in the absorption tower decreases. However, as in the present invention, the issue is resolved by allowing the fresh water sprayed from the nozzle to contact the exhaust gas, thereby raising the exhaust gas temperature to the range required for the absorption reaction.

The storage space 108 refers to a designated space at the bottom of the pre-treatment tower and is a space for storing falling fresh water. This space can store fresh water, and a constant volume of fresh water is always stored within it and circulates through a closed loop consisting of an inlet line 111 and an outlet line 116, which are configured between the pre-treatment tower and the heater of the regenerator described later.

The outlet 110 is where the clear water stored in the storage space 108 flows out. It is in fluid connection with the outlet line 116, enabling the supply of fresh water to the heater 330.

The discharge outlet 109 is an exit formed between the top of the storage space 108 and the bottom of the packing 106, through which the heated exhaust gas is discharged. It is in fluid connection with the outlet line 113 through which the discharged exhaust gas flows. As previously described, exhaust gas heated to 35-45°C is supplied to the absorption tower via the outlet line 113. This increases carbon dioxide absorption efficiency in the absorption tower without requiring an additional heating process.

The demister 106 is installed on the outlet 109 and functions to filter out fresh water droplets contained in the exhaust gas, preventing these droplets from being discharged through the outlet 109 and flowing into the absorption portion. Various disclosed demister configurations can be employed. As will be described later, the absorption portion may comprise two or more spatially separate absorption towers. Since each tower has a predetermined absorbent concentration, if fresh water droplets enter the absorption portion, it changes the absorbent concentration and then reduces carbon dioxide absorption efficiency. Therefore, to maintain the specified absorbent concentration in each tower, moisture ingress into the absorption portion must be prevented.

The water treatment portion 130 is configured to be in fluid connection with the storage space 108 to remove various impurities, such as salts and dust, that may be present in the exhaust gas entering the pre-treatment tower. While various known water treatment technologies may be applied to the water treatment portion, a membrane type is preferably suitable. The water treatment portion 130 at least partially draws in fresh water through a withdrawal line 132 fluidly connected to the storage space 108. After treatment, the water is discharged to the outlet line 116 via a return line 134 configured to be fluidly connected to the outlet line 116. This allows purified fresh water to be supplied to the heater 330, thereby preventing damage caused by impurities in the fresh water to components such as the outlet line 116, return line 134, etc. The advantage of directly fluid-connecting one end of the return line to the outlet line 116 rather than the storage space 108 is that it reduces the contamination level of the fresh water in the outlet line 116 compared to direct fluid connection to the storage space 108.

The heat exchanger 120 is provided on the fresh water outlet line 116 to cool the temperature of the fresh water entering the heater. During winter, there is an issue where exhaust gas is excessively cooled by seawater in the scrubber. However, in summer, seawater temperature rises to 32°C. If the pre-treatment tower then heats this water, the exhaust gas temperature exceeds the required absorption reaction temperature range of 35-45 ° C for the absorption tower. Therefore, the fresh water flowing through the outlet line 116 is heat-exchanged with seawater supplied through the seawater supply line 118 to adjust it to the seawater temperature range, thereby preventing the exhaust gas supplied to the absorption tower from being overheated.

The blower 115 is a component installed on the exhaust gas outlet line 115, forcibly drawing the exhaust gas in the pre-treatment tower 101 and supplying it to the absorption tower. Due to the forced suction of the blower, the exhaust gas from the scrubber is forcibly introduced into the pre-treatment tower 101 through the inlet line 102, passes through the packing 105, and can be delivered into the absorption tower along the outlet line 113.

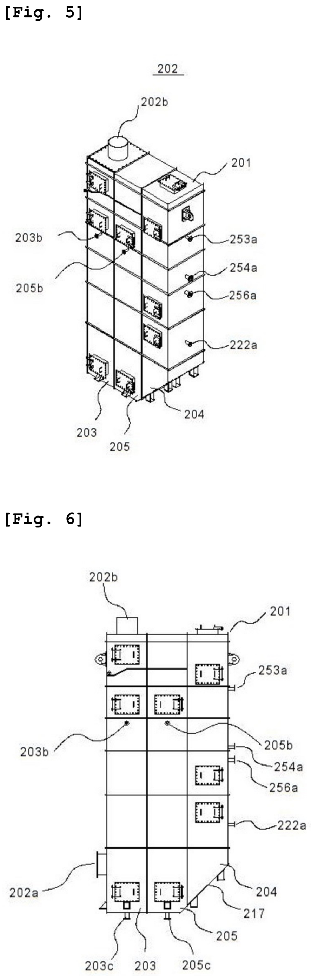

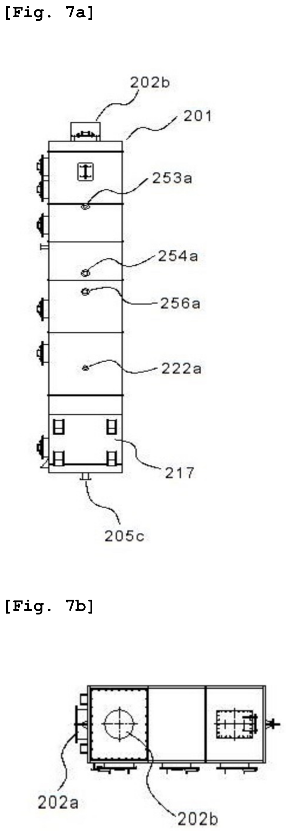

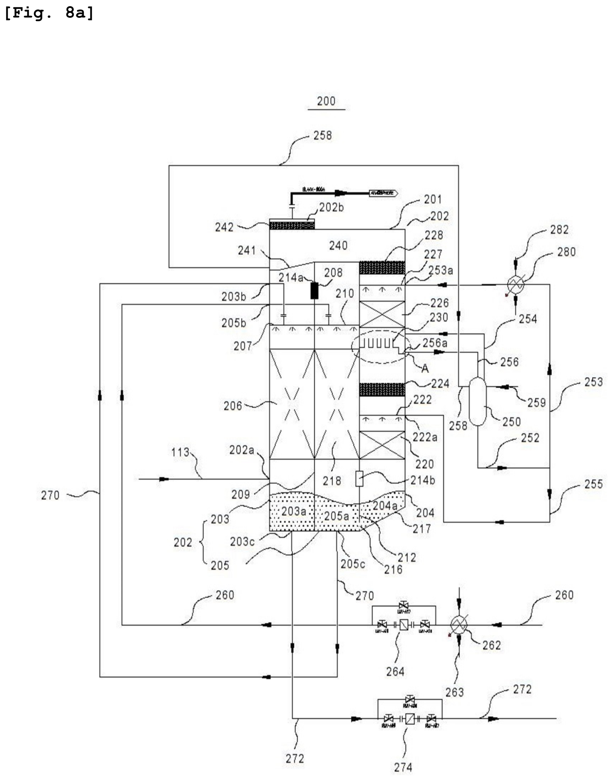

Fig. 5 is a perspective view of the absorption tower shown in Fig.2, Fig.6 is a front view of the absorption tower shown in Fig.2. Fig. 7a is a side view of the absorption tower shown in Fig.2, and Fig.7b is a plan view. Fig.8a is a view of the absorption portion shown in Fig.2.

As shown in Fig.8a, the absorption portion 200 includes an absorption tower 202 in fluid connection with the exhaust gas outlet line 113, the absorbent inlet line 260, and the outlet lines 270 and 272.

The absorption tower 202 is designed to enhance spatial efficiency considering the characteristics of the ship, the field where the present invention is applied. The term 'spatial efficiency' as used herein refers to the ratio of the internal volume- meaning the volume of the space through which exhaust gas flows-of the absorption tower to the same allotted space within the ship. Therefore, the higher the ratio of the absorption tower's internal volume relative to the same ship space volume is, the higher the 'spatial efficiency' can be said to be. This definition applies equally to the pre-treatment tower. The absorption tower 202 has both a projection plane (or cross-section) onto the ground in the side view of Fig.7a and a projection plane (or cross-section) onto the ground in the plan view of Fig.7b that are rectangular or square. Therefore, compared to conventional cylindrical absorption towers, it can achieve higher spatial efficiency. This allows more exhaust gas to be extracted from the scrubber for processing, thereby increasing the absorption efficiency of carbon dioxide.

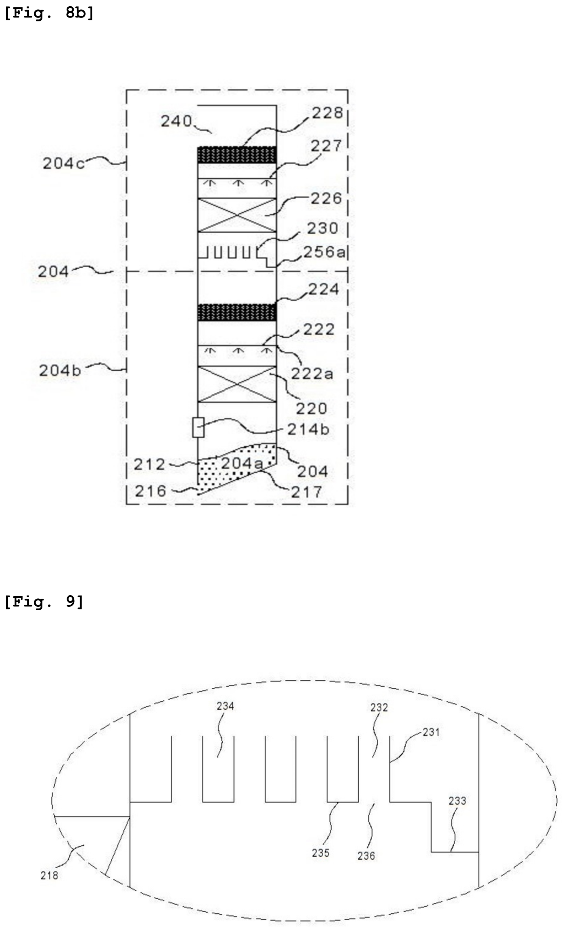

The absorption tower 202 includes a housing 201 having a hexahedral shape with a rectangular or square projection in side and plan views, and said housing defines an absorption space where an absorbent is sprayed and carbon dioxide in the exhaust gas is absorbed by the absorbent. The absorption space may be considered identical to the internal volume of the aforementioned absorption tower, but in the embodiment described below where a post- treatment tower is added, the internal volume of the post-treatment tower is excluded. The absorption tower 202 includes an inlet 202a through which exhaust gas flows in and an outlet 202b through which exhaust gas flows out. As shown in Fig. 8a and 8b, the inlet 202a is in fluid connection with the exhaust gas outlet line 113.

The absorption tower 202 may include an absorption tower 205 where the regenerated absorbent supplied from the regeneration portion is first introduced, and an absorption tower 203 where the exhaust gas inlet 202a is formed. The absorption tower 203 where the exhaust gas is first introduced may be referred to as the 'reference absorption tower', and the absorption tower 205 where the regenerated absorbent supplied from the regeneration portion is first introduced may be referred to as the 'regeneration absorption tower'. The regeneration absorber tower refers to the absorption tower located furthest from the reference absorption tower. For convenience, the reference absorption tower 205 and the regeneration absorber tower 203 are used as examples herein, but one or more additional absorption towers may be included between them. Therefore, one or more additional absorption towers may be provided between the regeneration absorption tower 205 and the reference absorber tower 203. Furthermore, 'adjacent absorption tower' means an absorption tower positioned consecutively to the right or left of a specific absorption tower, as shown in Fig. 8a.

As shown above, two or more absorption towers 203 and 205 are arranged in a consecutive transverse direction and interconnected to allow internal exhaust gas flow. Here, 'interconnected between absorption towers' means that while the internal spaces are mutually and independently partitioned by a partition wall 209 between the absorption towers, exhaust gas can flow through passages 214a and 214b formed on the partition wall.

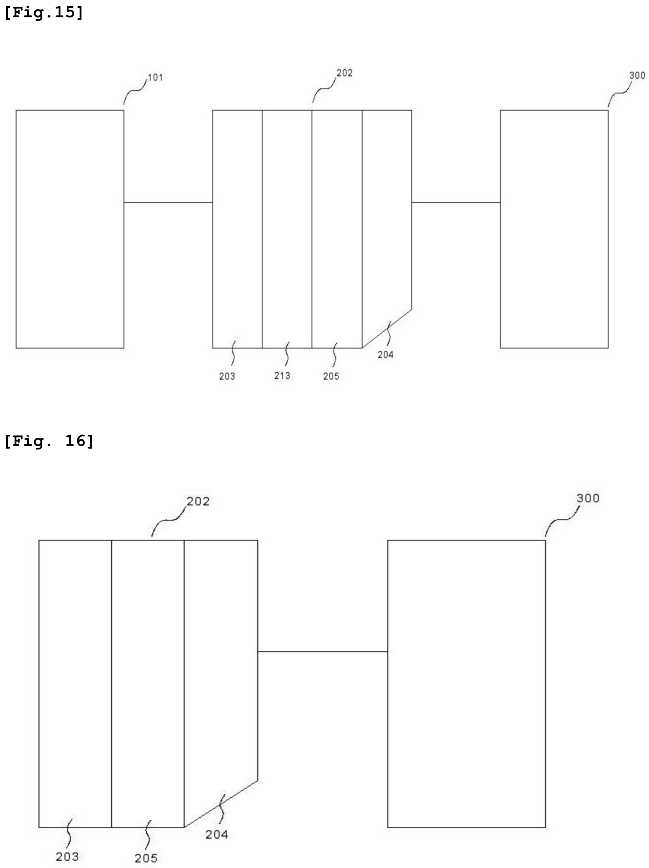

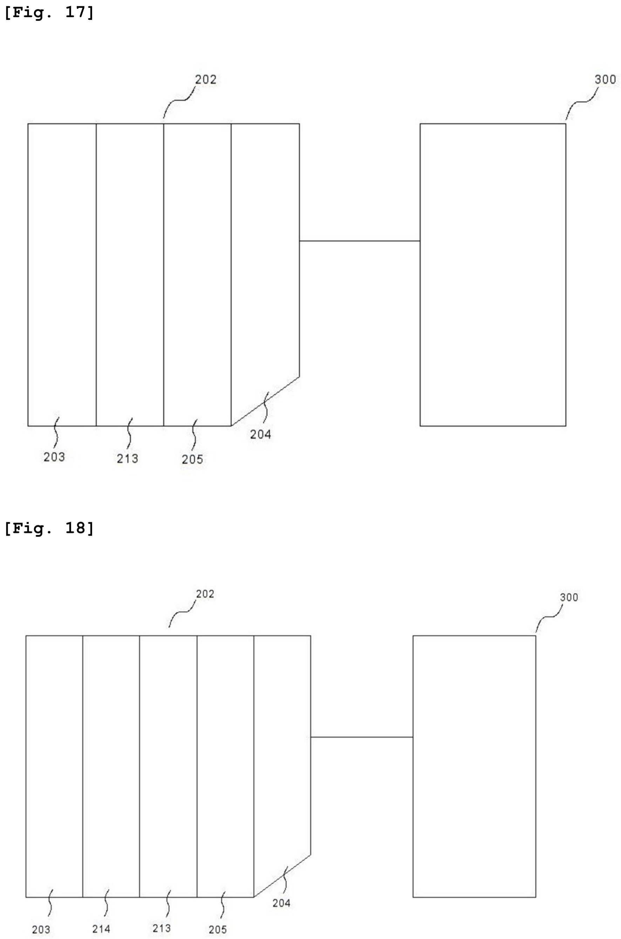

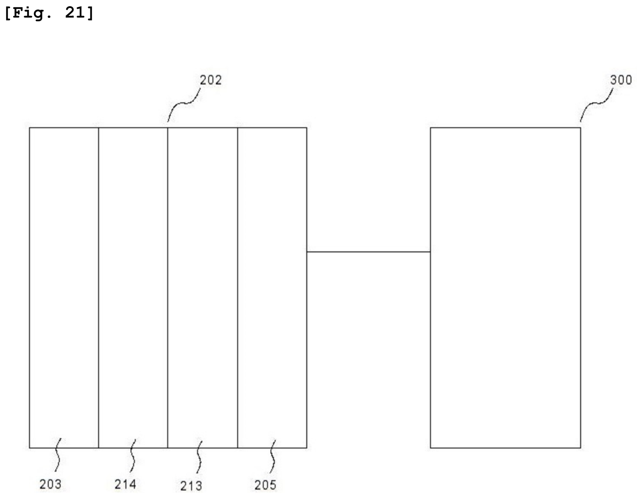

The regeneration absorption tower 205 includes an inlet 205b in fluid connection with an inlet line 260 through which the regenerated absorbent supplied from the regeneration portion flows, a nozzle 210 for spraying the inflowing absorbent in the direction of gravity, a packing 218 for absorbing carbon dioxide by allowing the absorbent sprayed from said nozzle to adhere to the surface and flow down while contacting the exhaust gas, a storage space 205a for storing the absorbent that has fallen downward, an outlet 205c in fluid connection with said storage space 205a and an outlet line 270. The regenerated absorbent supplied from the regeneration portion is first supplied to the regeneration absorption tower 205, which is in fluid connection with the inlet line 260, and is sprayed in the direction of gravity through the nozzle 210. It absorbs carbon dioxide from the exhaust gas while contacting the exhaust gas flowing into the internal space of the regeneration absorption tower from the reference absorption tower 203. Subsequently, the absorbent having captured carbon dioxide and fallen, is stored in a storage space 205a located at the bottom of the regeneration absorption tower 205. It then flows out through an outlet 205c in fluid connection therewith into an outlet line 270 and is supplied to the adjacent absorption tower, the reference absorption tower 203. For example, as shown in Figs.15, 17, and 20, if another absorption tower 213 is provided between the regeneration absorption tower 205 and the reference absorption tower 203, the absorbent discharged from the regeneration absorption tower is supplied to the adjacent absorption tower 213 to absorb carbon dioxide, and finally supplied to the reference regeneration tower 203 to absorb carbon dioxide. Furthermore, as shown in Figs. 18 and 21, when two absorption towers 213 and 214 are provided, the absorbent discharged from the regeneration absorption tower 205 is supplied to the adjacent regeneration tower 214 to absorb carbon dioxide. Subsequently, the discharged absorbent is supplied again to the adjacent absorption tower 213 to absorb carbon dioxide. Finally, the discharged absorbent is supplied to the reference absorption tower 203 to absorb carbon dioxide. As seen above, while the exhaust gas flows from the reference absorption tower 203 toward the regeneration absorption tower 205, the absorbent is first injected from the regeneration absorption tower 205 and the discharged absorbent is then supplied to the adjacent absorption towers 213 and 214 and finally sprayed in the reference absorption tower 203. Therefore, the injection sequence of the absorbent is opposite to the flow direction of the exhaust gas. The absorbent supplied to the absorption portion after regeneration is completed is in a 'lean' state, offering the highest CO₂ absorption capacity. Conversely, the 'rich' absorbent, which has absorbed CO₂, has a lower CO₂ absorption capacity compared to the 'lean' absorbent. Furthermore, the exhaust gas entering the reference absorption tower 203 has the highest carbon dioxide concentration and is easily absorbed by the absorbent. However, as the exhaust gas flows to the adjacent absorption towers, the carbon dioxide concentration in the exhaust gas decreases and the absorption capacity of the absorbent is gradually declining. Since the carbon dioxide concentration in the exhaust gas decreases gradually as the exhaust gas moves from the reference absorption tower 203 to the regeneration absorption tower 205, the leanest absorbent is supplied first to the regeneration absorption tower 205 to enhance its CO₂ absorption capacity. Subsequently, the discharged absorbent is supplied to the adjacent absorption tower where the CO ₂ concentration is higher than that of the regeneration absorption tower. This ensures absorption capacity equivalent to that in the regeneration absorption tower even if the absorbent supplied to the adjacent absorption tower is richer than that in the regeneration absorption tower. Ultimately, the carbon dioxide absorption capacity in the reference absorption tower is ensured equivalently to the other absorption towers as the exhaust gas first entering the reference absorption tower 203 has the highest carbon dioxide concentration, even if the absorbent supplied to the reference absorption tower 203 is the 'richest' absorbent. Furthermore, the flow velocity of the exhaust gas within the absorption towers slows down as it moves from the reference absorption tower to the regeneration absorption tower. Therefore, even if the 'lean' state absorbent is injected into the reference absorption tower 203, some carbon dioxide will move toward the regeneration absorption tower without being absorbed in the reference absorption tower. This is another reason for applying the absorbent in the above sequence. This method ensures uniform carbon dioxide absorption capacity in each absorption tower, thereby enhancing the overall carbon dioxide absorption capacity.

The packing 206 and 218 installed within the absorption tower is configured to allow the sprayed absorbent to adhere and stay for a certain period. Here, the absorbent comes into contact with the exhaust gas, absorbing carbon dioxide through the reaction described above.

As shown in Fig.8a, the absorption towers are spatially separated from each other by a partition wall 209 while being interconnected via a passage 214a. The absorption tower 203 is the reference absorption tower where exhaust gas is first introduced. Exhaust gas introduced through the inlet 202a formed at the lower side moves upward and comes into contact with the absorbent supplied from the adjacent regeneration absorption tower 205 and sprayed in the direction of gravity through the nozzle 207, thereby removing carbon dioxide. The absorbent that has absorbed carbon dioxide then falls into and is stored in the lower storage space 203a. It is then supplied to the regeneration portion through the outlet line 272 in fluid connection with the outlet 203c. Then, the exhaust gas, from which a certain amount of carbon dioxide has been removed, flows into the adjacent regeneration absorption tower 205 through the passage 214a located at the upper part.

According to another embodiment of the present invention, a demister 208 may be provided in the passage 214a. As described earlier, the demister 208 filters out absorbent droplets or moisture contained in the exhaust gas or present within the internal space of the absorption tower 203, preventing them from passing into the adjacent absorption tower. The absorbent typically takes the form of a composition comprising an amine-based compound and water. During the absorption reaction process, the absorbent may convert into droplets or its water component may convert into water vapor, potentially flowing into adjacent absorption towers. In such cases, the absorbent concentration within that tower or adjacent towers changes, preventing the attainment of the desired level of carbon dioxide absorption efficiency. Therefore, by preventing liquid droplets generated in each absorption tower from entering adjacent absorption towers, the demister maintains a constant absorbent concentration, thereby enhancing carbon dioxide absorption efficiency.

Subsequently, the adjacent absorption tower 205 receives the exhaust gas transferred from the absorption tower 203 and form a co-current flow to absorb carbon dioxide.

According to another embodiment of the present invention, the absorption tower 202 may additionally include a post-treatment tower 204 at the rear end of the regeneration absorption tower 205.

The post-treatment tower 204 serves to wash and remove absorbent droplets contained in the exhaust gas before the exhaust gas, for which the carbon dioxide absorption process has been completed, is finally discharged into the atmosphere. The post-treatment tower is configured to be connected to the rear end of the regeneration absorption tower 205 and be spatially separated by the partition wall 212 and have a passage 214b at its lower side, allowing exhaust gas to move through the passage 214b into the post-treatment tower 204. The passage 214b of the post-treatment tower is formed at the lower side of the partition wall 212, specifically at the upper side of the storage space 205a and the lower side of the packing 218.

As shown in Fig.8b, the post-treatment tower 204 comprises a lower section 204b for supplementing water to adjust the absorbent concentration increased during the absorption process at a constant level, and an upper section 204c for finally washing out the absorbent contained in the exhaust gas. While there is an optimal absorbent concentration for efficiently absorbing carbon dioxide, as the absorption process proceeds, moisture evaporates, causing the absorbent concentration to increase and resulting in a problem where the carbon dioxide absorption efficiency decreases.

The lower section 204b includes a make-up water inlet 222a, packing 220, nozzle 222, demister 224, and storage space 204a.

The make-up water inlet 222a is in fluid communication with the buffer tank 250 described later via the inlet line 255. Fresh water from the buffer tank flows in and is sprayed into the lower section through the nozzle 222, thereby reducing the concentration of the absorbent to a certain level. This regulates the concentration of the absorbent to an optimal level.

The packing 220 is positioned below the nozzle and above the storage space 204a. Fresh water sprayed from the nozzle 222a adheres to the packing and flows down, increasing the residence time and contact area with the exhaust gas and then washing out the absorbent contained in the exhaust gas to an optimal level.

The storage space 204a is located at the bottom of the post-treatment tower and serves as a space for storing the absorbent. It is fluidically connected to the storage space 205a of the adjacent regeneration absorption tower 205 through a fluid passage 216 formed by opening a portion of the lower end of the partition wall 212.

Furthermore, the bottom surface 217 of the storage space 204a is inclined toward the storage space 205a of the regeneration absorption tower 205, allowing the fresh water in the storage space 204a of the post-treatment tower 204 to flow toward the storage space 205a of the regeneration absorption tower 205, allowing the diluted absorbent to move through the absorbent outlet line 270 of the regeneration absorption tower to an adjacent absorption tower or the reference absorption tower. Since the absorbent concentration is adjusted at a desired level and then supplied to the reference absorption tower, it enables efficient absorption of carbon dioxide in the reference absorption tower.

The demister 224 filters out any fresh water, absorbent droplets, or water vapor contained in the exhaust gas exiting the lower section 204b, allowing only the exhaust gas from which these have been removed to move to the upper section 204c. Various disclosed techniques are employed for this purpose.

The upper section 204c is a region for finally removing the absorbent contained in the exhaust gas flowing in from the lower section, and includes a blocking means 230, packing 226, nozzle 227, and demister 228.

An example of the blocking means 230, a chimney tray, is shown in Fig. 9. As shown in Fig. 9, the blocking means 230 is configured to prevent fresh water sprayed in the upper region from falling into the lower section and includes a through hole 236, a bottom 235, a longitudinal hole 232, and a chimney 231.

The bottom 235 is provided to span the cross-section of the post-treatment tower 204, blocking fresh water falling in the upper section from flowing into the lower section. The through hole 236 is formed in plural numbers on the bottom 235 and are holes made in the bottom 235 to allow exhaust gas from the lower section to flow into the upper section. The chimney 231 is a wall formed vertically along the perimeter of the through hole 236, having a chimney shape, defining the longitudinal hole 232 for exhaust gas flow and a storage space 234 for receiving falling fresh water. All fresh water collected in the storage space 234 is directed to a collection well 233. In addition to the above configuration, various known chimney trays may be applied.

Referring to Fig.8a, the packing 226 is positioned on the upper side of the blocking means. It allows falling fresh water to adhere and stay for a certain period, enabling contact with rising exhaust gas. This facilitates the washing out of the absorbent or its droplets contained in the exhaust gas by the fresh water.

The nozzle 227 is positioned above the packing and configured to spray fresh water supplied from the buffer tank described later. The demister 228 filters out droplets of fresh water or absorbent contained in the exhaust gas exiting from the upper section 204c, ensuring only the exhaust gas from which these are removed is discharged. Various known techniques may be employed.

According to another embodiment of the present invention, the absorption tower 202 may further include a condensation chamber 240.

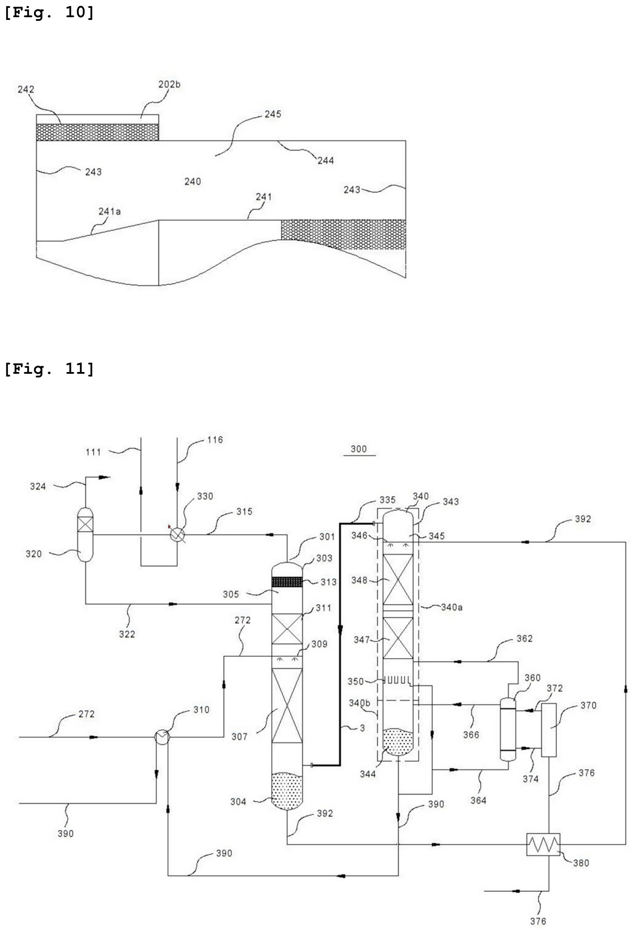

The condensation chamber 240 is formed to extend transversely across the entire absorption tower while communicating with the post-treatment tower 204. As shown in Figs. 8a and 10, the condensation chamber 240 extends longitudinally like a tunnel, traversing the entire absorption tower from the top, passing through the reference absorption tower, regeneration absorption tower, and the post-treatment tower. By ensuring sufficient residence time for the exhaust gas within this tunnel, moisture contained in the exhaust gas is condensed. Only the moisture-removed exhaust gas is discharged into the atmosphere, while the condensed moisture (hereinafter, referred to as condensate) is returned into the buffer tank 250 described later. Furthermore, any absorbent components that may remain in the exhaust gas may also be returned with the condensate.

The condensation chamber 240 is defined by a top surface 244, two side surfaces 243, and a bottom surface 241. The top surface 240 and both side surfaces 243 are a part of the housing 201 of the absorption tower, and the bottom surface 241 is the portion constituting the top surface of the reference absorption tower 203 and the regeneration absorption tower 205. Therefore, an internal space 245 enclosed by the top surface, bottom surface, and both side surfaces is defined, and condensation occurs within this internal space 245 as the movement speed of the exhaust gas slows down and the residence time increases.

Additionally, the bottom surface 241 may further include an inclined surface 241a on one side. This inclined surface 241a is a sloped portion of the bottom surface. It is connected to the return line 258 in fluid connection with the buffer tank 250 described later, allowing the condensate to flow down and be easily collected in the buffer tank.

The condensation chamber 240 is configured to be connected to the outlet 202b of the absorption tower 202 and may additionally include a demister 242 on the outlet 202b. The demister 242 filters out droplets, similar to the other demisters described earlier.

According to another embodiment of the present invention, the absorption portion of the carbon dioxide capture device 1 of the present invention may further include a buffer tank 250.

As shown in Fig.8a, the buffer tank 250 is a tank for storing fresh water, and is fluidically connected to the lower section 204b via an inlet line 255, fluidically connected to the upper section 204c via an inlet line 253, fluidically connected to the condensation chamber 240 via a return line 258, fluidically connected to the sump 233 in the upper section 204c via a return line 256, and fluidically connected to the upper section via an outlet line 254.

The fresh water from the buffer tank 250 is supplied to the lower section 204b through the inlet line 255 fluidically connected to the outlet line 252 of the buffer tank, thereby regulating the concentration of the absorbent at a constant level. Furthermore, fresh water from the buffer tank is supplied to the upper section 204c through the inlet line 253 fluidically connected to the outlet line 252 of the buffer tank, thereby scrubbing exhaust gas and returning the absorbent. The fresh water applied to the upper section collects in the sump 233 of the blocking means 230 and returns to the buffer tank 250 via the return line 256 fluidically connected to the sump. An outlet line 254 fluidically connecting the top of the buffer tank and the upper side of the shut-off means 230 discharges gas (air, water vapor) accumulated in the buffer tank to the upper section, thereby facilitating the return of fresh water through the return line 256. Furthermore, the buffer tank is fluidically connected to the condensation chamber 240 via a return line 258, allowing condensate to be returned into the buffer tank.

As shown in Fig.8a, according to another embodiment of the present invention, the absorption portion 200 may further include a filter 264 on the inlet line 260 through which the regenerated absorbent flows. The filter 264 filters out impurities, such as salts contained in the absorbent supplied from the regeneration portion, thereby preventing contamination of the absorption portion by impurities.

As shown in Fig.8a, according to another embodiment of the present invention, the absorption portion 200 may further include a cooler 262 on the inlet line 260. The cooler 262 cools the temperature of the absorbent supplied from the regenerator to a temperature suitable for the absorption reaction, thereby increasing the absorption efficiency of carbon dioxide.

As shown in Fig.8a, according to another embodiment of the present invention, the absorption portion 200 may further include a filter 274 on an outlet line 272 through which the 'rich' state absorbent discharged from the reference absorption tower 203 flows. By removing impurities such as salts contained in the absorbent via the filter and then delivering the absorbent to the regeneration portion, contamination or damage to the regeneration portion caused by impurities can be prevented.

Fig.11 is a view of the regeneration portion shown in Fig.2. Referring to Fig.11, the regeneration portion 300 is described below.

The regeneration portion 300 includes a regeneration tower 301 into which the absorbent supplied from the absorption portion first enters, and an adjacent regeneration tower 340 that receives the regenerated absorbent from the regeneration tower 301 and regenerates it again.

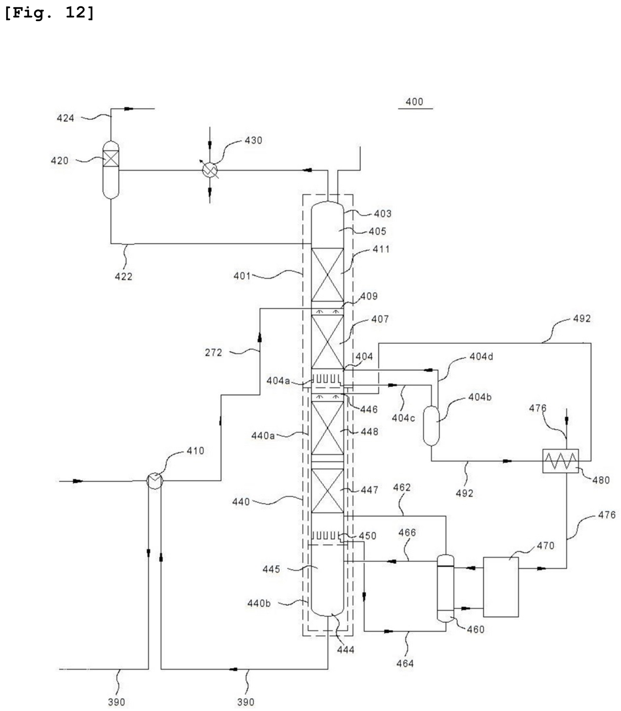

The regeneration tower 301 and the adjacent regeneration tower 340 may be provided as a single tower as shown in Fig. 12, or as two independent towers as shown in Fig. 11. Fig. 11, showing the configuration with independent towers, will be described first.

The regeneration tower 301 includes a housing 303 defining an internal space 305 where regeneration occurs. Within this internal space 305, the following components are arranged from bottom to top: storage space 304, primary packing 307, nozzle 309, secondary packing 311, and demister 313.As will be described later, unlike the absorption process, the regeneration process is an endothermic reaction, requiring a significant amount of regeneration energy. Before the absorbent enters the regeneration tower 301, it is heated to approximately 120°C via heat exchange in the heater 310 and then enters the regeneration tower. Consequently, the temperature of the internal space is maintained at a high level of approximately 120°C, allowing carbon dioxide to be desorbed from the absorbent.

The nozzle 309 is positioned above the packing and sprays 'rich' absorbent.

The primary packing 307 is positioned below the nozzle 309 and allows the falling absorbent to adhere and stay for a certain period, enabling efficient desorption of carbon dioxide from the absorbent. The primary packing also maintains a similar temperature due to the high-temperature absorbent, facilitating the desorption reaction.

The secondary packing 311 is positioned above the nozzle 309. It allows the absorbent droplets or water vapor rising with the desorbed carbon dioxide to adhere and stay for a certain period, enabling the carbon dioxide to be desorbed once more. The liquid components then fall downward.

The demister 313 filters out water vapor or droplets of absorbent from the exhaust gas, such as carbon dioxide and water vapor, ensuring that only gases from which these droplets have been removed are discharged. Various known technologies may be utilized.

The storage space 304 is a space formed in the lower part of the housing 303 where the absorbent of which carbon dioxide has been primarily desorbed and regenerated, is stored. It is fluidically connected to the adjacent regeneration tower 340 via the outlet line 392, supplying the absorbent to the adjacent regeneration tower 340.

The adjacent regeneration tower 340 receives the absorbent supplied from the regeneration tower 301 via the outlet line 392, sprays the absorbent from the top, and desorbs carbon dioxide from the absorbent.

As shown in Fig.11, the regeneration tower 340 comprises a desorbing zone 340a for regenerating the supplied absorbent and a storage zone 340b for retrieving and storing the regenerated absorbent.

The desorbing zone 340a includes a blocking means 350, a primary packing 347, a secondary packing 348, and a nozzle 346.

The nozzle 346 is configured to spray the absorbent supplied through the outlet line 392. As will be described later, a considerable amount of regeneration energy is consumed during the carbon dioxide desorbing process in the regeneration tower 301. Consequently, the absorbent stored in the storage zone 304 of the regeneration tower 301 is at a somewhat reduced temperature (approximately 105-110 ° C). Therefore, a heater 380 is placed on the outlet line to raise its temperature to approximately 120°C.

The primary packing 347 and secondary packing 348 are positioned below the nozzle 346. They allow the falling absorbent to adhere and remain for a certain period, enabling efficient CO ₂ stripping from the absorbent. The high-temperature absorbent also keeps the packings at a similar temperature, thereby facilitating the stripping reaction.

The blocking means 350 has the same structure as the chimney tray of the absorption tower described earlier, so a detailed explanation is omitted. Although the absorbent collected in the blocking means is absorbent that has undergone some degree of regeneration, it is sent to the heating boiler 360 so that the regeneration process can proceed again through the heating boiler 360, as described later.

Furthermore, gases such as carbon dioxide and water vapor separated in the desorbing zone are supplied to the regeneration tower 301 via a flow line 335. This flow line is fluidically connected to the top of the desorbing zone 340a and to the bottom of the regeneration tower 301. The gases are then stripped once more and flow upward.

The storage zone 340b is configured to allow carbon dioxide to flow but prevent direct inflow of the absorbent from the desorbing zone 340a. It includes a storage space 344 that receives and stores absorbent supplied from the heating boiler 360.

The absorbent stored in the storage zone 340b is in a fully regenerated state, maintaining the 'leanest' condition, and is fluidically connected to the absorption portion, i.e., the reference absorption tower, via the outlet line 390. From the perspective of the regeneration tower, the outlet line 390 is merely a name assigned for convenience to the inlet line 260 shown in Fig. 8a, and it is the same flow path through which the same absorbent flows.

According to another embodiment of the present invention, the regeneration portion 300 may additionally include a heater 380 and a heating boiler 360.

Ships are equipped with steam boilers 370 that produce steam for various purposes. The present invention supplies the steam generated by this steam boiler to a heating boiler 360. It utilizes the thermal energy of the steam to heat the absorbent returned to the heating boiler, thereby stripping carbon dioxide. Furthermore, the combustion gas discharged from the steam boiler 370 is supplied to the heater 380. This heater exchanges heat with the absorbent passing through it, thereby raising its temperature.

The heater 380 is a heat exchanger installed at the intersection point of the outlet line 376 where the combustion gas from the steam boiler 370 is discharged and the outlet line 392 where the regenerated absorbent discharged from the regeneration tower 301 flows. It exchanges heat between the combustion gas from the steam boiler 370, which has high thermal energy, and the absorbent, thereby raising the absorbent's temperature to the level required for the desorbing reaction in the adjacent regeneration tower. Since it utilizes the thermal energy of the combustion gas from the steam boiler 370, commonly used on ships, to raise the absorbent's temperature, no additional regeneration energy is required, thereby enabling improved energy efficiency.

Furthermore, the heating boiler 360 receives high-temperature steam produced by the steam boiler 370 via the inlet line 372. It then retrieves the absorbent from the desorbing zone 340a via the return line 364, exchanges heat with the steam, and strips carbon dioxide from the absorbent once more. The steam used for heat exchange is returned to the ship's steam boiler 370 system via the outlet line 374.

The heating boiler 360 provides the separated gases, such as carbon dioxide and water vapor, to the desorbing zone 340a via an outlet line 362 in fluid connection with the desorbing zone 340a at the top. and provides the absorbent of which carbon dioxide has been removed to the storage zone 340b via an outlet line 366 in fluid connection to the storage zone 340b. Therefore, the absorbent stored in the storage zone is the 'leanest' state absorbent, having completed regeneration.

According to another embodiment of the present invention, the regeneration portion 300 may further include a heater 310. The heater 310 is a heat exchanger provided at the intersection point of an outlet line 390 in fluid connection to the storage space 344 of the regeneration tower 340 and an outlet line 272 fluidically connected to the storage space 203a of the reference absorption tower of the absorption portion. The temperature of the absorbent discharged from the regeneration tower 340 is approximately 120°C, which is very high, whereas the temperature of the absorbent transferred from the absorption portion is approximately 35-40 ° C. The heater 310 causes these two fluids to exchange heat, thereby raising the temperature of the absorbent to the temperature range required for carbon dioxide stripping in the regeneration tower.

According to another embodiment of the present invention, the regeneration portion 300 may additionally include a heater 330 and a gas-liquid separator 320.

The above heater 330 is positioned at the intersection point of the outlet line 315, which is fluidically connected to the top of the regeneration tower 301 at one end and to the gas-liquid separator at the other end, and the outlet line 116 and inlet line 111 of the fresh water from the pre-treatment portion 100. The gas in the outlet line 315 consists of desorbed carbon dioxide and water vapor, which have a very high temperature of approximately 90°C, while the fresh water has a very low temperature of approximately -2 to 15°C during winter. Therefore, by exchanging heat between the high-temperature gas from the outlet line 315 and the low-temperature fresh water, the temperature of the fresh water is raised and supplied back to the pre-treatment tower 101. This allows the temperature of the exhaust gas in the pre-treatment portion to be raised to the temperature range required for the absorption reaction using waste energy, without requiring additional energy input, thereby increasing the absorption efficiency in the absorption portion. Meanwhile, the water vapor contained in the gas discharged from the top of the regeneration tower 301, which includes carbon dioxide and water vapor, is condensed through heat exchange and flows into the gas-liquid separator below. For this reason, when viewed from the side of the regeneration tower, the heater may also be referred to as a condenser.

The gas-liquid separator 320 separates the condensed condensate and the carbon dioxide from the water vapor, enabling the carbon dioxide to be transferred to a post-treatment process such as a liquefaction process, while the condensate is reintroduced into the regeneration tower 301 via an outlet line 322 for processing.

Fig. 12 is a view of the regeneration portion of a carbon dioxide capture device according to another embodiment of the present invention. The regeneration portion 400 shown in Fig. 12 differs from the regeneration portion shown in Fig. 11 in that it is configured as a single tower, unlike the latter which has two regeneration towers connected by a flow line 335. For identical components, only the first digit of the drawing reference number is changed to '4'. Therefore, components with the same last digit number should be understood to perform the same function.

The regeneration tower 301 adjacent to the regeneration tower 340 in Fig.11 has the same configuration as the regeneration tower 440 adjacent to the regeneration tower 401 in Fig. 12.

Referring to Fig. 12, the 'rich' absorbent, which has absorbed carbon dioxide, flows into the upper regeneration tower 401 in fluid connection to the outlet line 272 of the absorption portion.

The upper regeneration tower 401 includes a housing 403 defining an internal space 405 where regeneration occurs. The internal space 405 includes, from bottom to top, a storage space 404, a primary packing 407, a nozzle 409, and a secondary packing 411.

The nozzle 409 is positioned above the packing and sprays 'rich' absorbent.

The primary packing 407 is located on the lower side of the nozzle 409, allowing falling absorbent to adhere and stay for a certain period of time, thereby enabling efficient desorption of carbon dioxide from the absorbent. The primary packing also maintains a similar temperature due to the high-temperature absorbent, facilitating the desorption reaction.

The secondary packing 411 is positioned above the nozzle 409. It allows the absorbent droplets or water vapor rising with the desorbed carbon dioxide to adhere and stay for a certain period, enabling the carbon dioxide to be desorbed once more. The liquid components then fall downward.

The storage space 404 is a space formed in the lower portion of the housing 403, serving as a storage space for regenerated absorbent material where carbon dioxide stripping has been primarily completed. It is fluidically connected to the lower regeneration tower 440 via the outlet line 492, thereby supplying the absorbent material therein to the lower regeneration tower 440. Unlike the embodiment of Fig.11, this embodiment includes a blocking means 404a to prevent the absorbent stored in the storage space 404 from flowing into the lower absorption tower 440. The blocking means 404a is configured to have the same structure as the chimney tray described earlier. Furthermore, this embodiment additionally includes a buffer tank 404b. The buffer tank 404b retrieves the absorbent stored in the storage space 404 via a return line 404c, one end of which is fluidically connected to the storage space 404 and the other end of which is fluidically connected to the buffer tank 404b. Moreover, the buffer tank 404b supplies the absorbent to the desorbing zone 440a through an outlet line 492 in fluid connection to the desorbing zone 440a to perform regeneration with the outlet line's one end in fluid connection to the buffer tank and the other end fluidically connected to the lower regeneration tower 440. Furthermore, the buffer tank 404b can discharge carbon dioxide or water vapor into the regeneration tower 401 via an outlet line 404d fluidically connected at one end to the buffer tank and at the other end to the upper storage space 404 of the upper regeneration tower 401.

The lower regeneration tower 440 receives the absorbent supplied from the regeneration tower 401 via the outlet line 492 and sprays it from the top to desorb carbon dioxide from the absorbent.

As shown in Fig. 12, the regeneration tower 440 comprises a desorbing zone 440a for regenerating the supplied absorbent and a storage zone 440b for retrieving and storing the regenerated absorbent.

The desorbing zone 440a includes a blocking means 450, a primary packing 447, a secondary packing 448, and a nozzle 446.

The nozzle 446 is configured to spray the absorbent supplied through the outlet line 492. As will be described later, a considerable amount of regeneration energy is consumed during the carbon dioxide stripping process in the regeneration tower 401. Consequently, the absorbent stored in the storage area 404 of the regeneration tower 401 is at a somewhat reduced temperature (approximately 105-110 ° C). Therefore, a heater 480 is placed on the outlet line 492 to raise its temperature to approximately 120°C.

The primary packing 447 and secondary packing 448 are positioned below the nozzle 446. They allow the falling absorbent to adhere and stay for a certain period, enabling efficient CO ₂ stripping from the absorbent. The high-temperature absorbent also maintains the packings at a similar temperature, facilitating the desorption reaction.

The blocking means 450 has the same structure as the chimney tray of the absorption tower described earlier, so a detailed explanation is omitted. Although the absorbent collected in the blocking means is absorbent that has undergone a certain degree of regeneration, it is sent to the heating boiler 460 so that the regeneration process can proceed once more through the heating boiler 460 described later.

Furthermore, gases such as carbon dioxide and water vapor separated in the desorbing zone are supplied to the upper regeneration tower 401 via the blocking means 404a. There, they undergo stripping once more and flow upward.

The storage zone 440b is configured to allow carbon dioxide to flow but prevent direct inflow of the absorbent from the desorbing zone 440a. It includes a storage space 444 that receives and stores absorbent supplied from the heating boiler 460.

The absorbent stored in the storage zone 440b is in a fully regenerated state, maintaining the leanest condition, and is fluidically connected to the absorption portion, i.e., the reference absorption tower, via the outlet line 390.

The above heater 480, heating boiler 460, and steam boiler 470 have the same configuration as those shown in Fig.11 and thus their detailed descriptions are omitted.

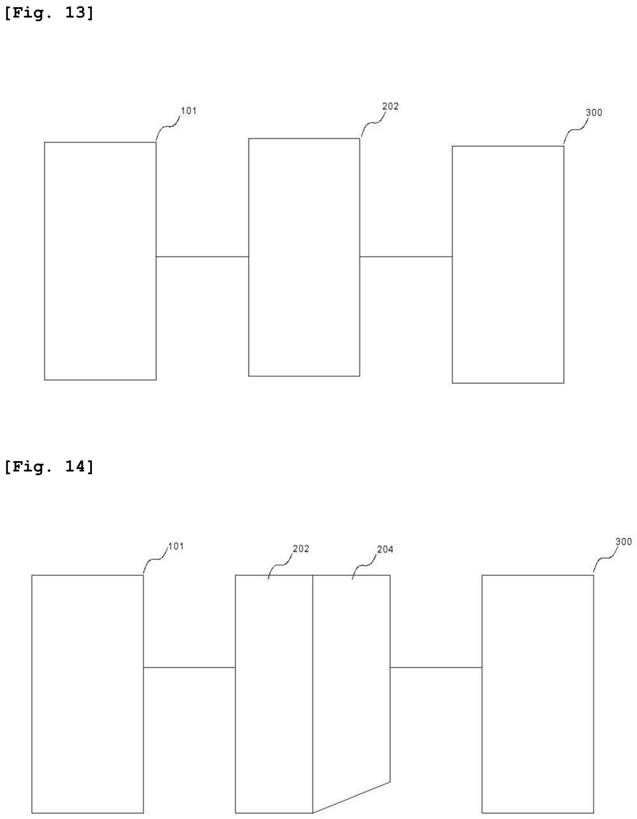

Figs.13 to 21 are drawings showing the schematic layouts of other embodiments of the present invention, which combine the pre-treatment portion, absorption portion, and regeneration portion in various ways. Although only the schematic layouts are shown, they incorporate the configurations described earlier.

Fig. 13 shows a carbon dioxide capture device comprising a pre-treatment portion 101, one absorption tower 202, and a regeneration portion 300. Therefore, exhaust gas discharged from the pre-treatment portion absorbs carbon dioxide in the single absorption tower 202 before being discharged into the atmosphere. The absorbent that has absorbed the carbon dioxide is supplied to the regeneration portion, undergoes a carbon dioxide desorption process, and is then reintroduced into the absorption portion.

According to another embodiment of the present invention, as shown in Fig.14, the carbon dioxide capture device may also be configured to comprise a pre-treatment portion 101, one absorption tower 202, one post-treatment tower 204, and a regeneration portion. This carbon dioxide capture device introduces exhaust gas that has passed through the pre-treatment portion into one absorption tower to remove carbon dioxide. It then removes droplets or moisture from the absorbent in one post-treatment tower, sends the absorbent to the regeneration portion for regeneration, and subsequently reintroduces it into the absorption tower.

According to another embodiment of the present invention, as shown in Fig.15, it may also be configured as a carbon dioxide capture device comprising a pre-treatment portion, three absorption towers 203, 213, and 205, one post-treatment tower 204, and a regeneration portion 300. The exhaust gas discharged from the pre-treatment portion flows in the order of the reference absorption tower 203, the absorption tower 213, and the regeneration absorption tower 205. The absorbent supplied from the regeneration portion is provided in the order of the regeneration absorption tower 205, the intermediate absorption tower 213, and the reference absorption tower 203.

According to another embodiment of the present invention, as shown in Fig.16, a carbon dioxide capture device may also be configured to comprise two absorption towers 203 and 205, one post-treatment tower 204, and a regeneration portion 300.

According to another embodiment of the present invention, as shown in Fig.17, a carbon dioxide capture device may be configured to comprise three absorption towers 203, 213, and 205, one post-treatment tower 204, and a regeneration portion 300.

According to another embodiment of the present invention, as shown in Fig.18, a carbon dioxide capture device may also be configured to comprise four absorption towers 203, 214, 213, and 205, one post-treatment tower 204, and a regeneration portion 300. The exhaust gas flows in the order of the reference absorption tower 203, absorption tower 214, absorption tower 213, and regeneration absorption tower 205. The absorbent supplied from the regeneration portion is provided in the order of the regeneration absorption tower 205, absorption tower 213, absorption tower 214, and reference absorption tower 203.

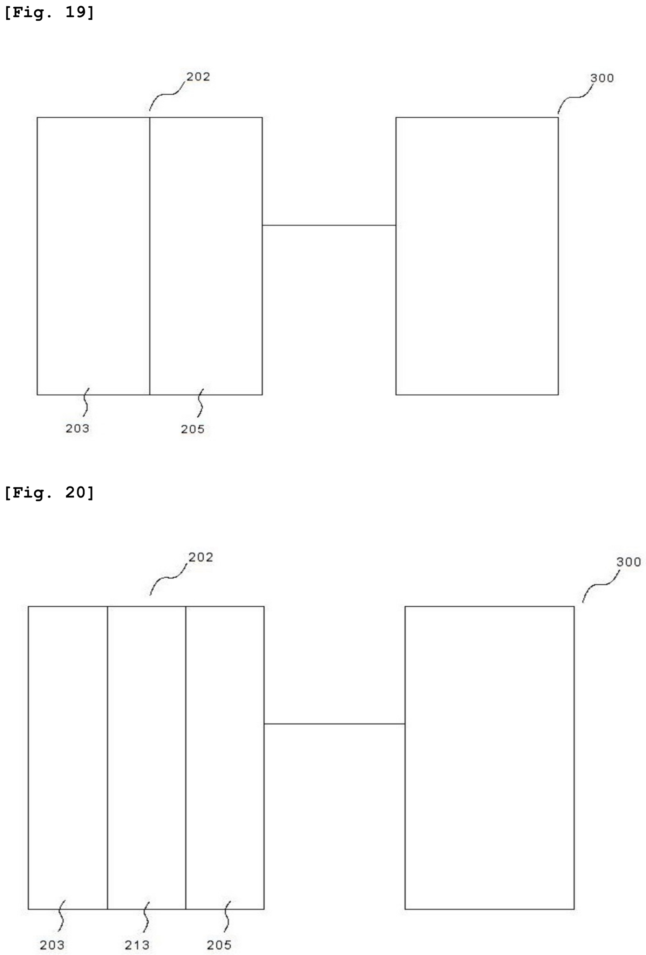

According to another embodiment of the present invention, as shown in Fig. 19, a carbon dioxide capture device may be configured to comprise two absorption towers 203 and 205, and a regeneration portion 300.

According to another embodiment of the present invention, as shown in Fig.20, a carbon dioxide capture device may be configured to comprise three absorption towers 203, 213 and 205, and a regeneration portion 300.

According to another embodiment of the present invention, as shown in Fig.21, a carbon dioxide capture device may also be configured to comprise four absorption towers 203, 214, 213, and 205 and a regeneration portion 300.

## Claims

1. A carbon dioxide capture device comprising an absorption portion including an absorption tower absorbing carbon dioxide from at least a portion of the exhaust gas bled off from scrubber, and a regeneration portion regenerating the absorbent discharged from the absorption portion, wherein the device further includes a pre-treatment portion between the scrubber and the absorption portion, and the exhaust gas extracted from the scrubber is introduced into the pre-treatment portion, adjusted to a predetermined temperature required by the absorption portion, and then introduced into the absorption portion.

2. The device of claim 1, wherein the pre-treatment portion raises the temperature of the exhaust gas to a predetermined temperature required in the absorption portion by heat exchange between the liquid of the heater of the regeneration portion and the exhaust gas.

3. The device of claim 2, wherein the pre-treatment portion includes a pre-treatment tower configured to be interconnected with an inlet line into which liquid discharged from heater of the regeneration portion is introduced, an inlet line into which exhaust gas partially bled off from the scrubber is introduced, an outlet line from which liquid discharged from the pre-treatment portion is discharged, and an outlet line from which the exhaust gas is discharged

4. The device of claim 3, wherein the outlet line of the exhaust gas of the pre-treatment portion is configured to be interconnected with the absorption portion and a blower is installed on the outlet line 113 of the exhaust gas, forcibly providing the exhaust gas within the pre-treatment tower.

5. The device of claim 2, wherein the pre-treatment portion further includes a nozzle capable of spraying the liquid in the heater that is introduced to the pretreatment portion into the exhaust gas, thereby raising the temperature of the exhaust gas through contact between the liquid sprayed from the nozzle and the exhaust gas.

6. The device of claim 3, wherein the liquid outlet line and the liquid inlet line are fluidically connected to the heater of the regeneration portion, thereby forming a closed circuit such that the liquid introduced into the pretreatment portion is returned to the heater.

7. The device of claim 6, wherein the liquid outlet line further includes a heat exchanger, the temperature of the liquid being cooled to a predetermined temperature through heat exchange between seawater and the liquid in the heat exchanger before being inflowed into the heater.

8. The device of any one of claims 2 to 7, wherein the post-treatment tower includes a storage space at the bottom for storing the liquid, one end of the outlet line of the exhaust gas being located above the storage space, one end of the outlet line of the liquid being in fluid connection to the storage space.

9. The device of claim 8, wherein a water treatment portion is configured to form a closed loop with the storage space, the water treatment portion removing impurities contained in the liquid stored in the storage space and supplying the filtered liquid to the heater.

10. The device of any one of claims 3 to 7, wherein the pre-treatment tower is integrally formed with the scrubber.

11. The device of any one of claims 2 to 7, wherein the absorption tower has a hexahedral shape with a cross-sectional and lateral section selected from a group consisting of square and rectangular shapes.

12. The device of claim 11, wherein the absorption tower comprises at least two absorption towers, and the at least two absorption towers are consecutively arranged in a transverse direction and interconnected to allow exhaust gas to flow therethrough.

13. The device of claim 11, wherein the absorption portion further includes a post-treatment tower interconnected with the absorption tower at the rear end of the absorption tower, and the exhaust gas discharged from the absorption tower is introduced into the post-treatment tower to remove absorbent droplet and water vapor contained in the exhaust gas.

14. The device of claim 13, wherein the device further includes a condensation chamber at the rear end of the post-treatment tower such that the exhaust gas stays inside the chamber for a certain period of time, the condensation chamber being formed as a hexahedral space extending transversely across the upper portions of the absorption tower and the post- treatment tower.

15. The device of Claim 11, wherein the regeneration portion includes a regeneration tower into which the absorbent discharged from the absorption portion is first introduced, and other regeneration tower into which the absorbent discharged from the regeneration tower is introduced.

16. The device of claim 15, wherein the other regeneration tower is in fluid connection to the regeneration tower into which the absorbent is first introduced such that the absorbent discharged from the other regeneration tower is supplied to the absorption portion and the carbon dioxide separated from the other regeneration tower is supplied to the regeneration tower into which the absorbent is first introduced;
the outlet line through which the absorbent discharged from the absorption portion flows to the regeneration tower into which the absorbent is first introduced being configured to be in fluid connection to the other regeneration tower; and
a heater being provided in the outlet line for raising the temperature of the absorbent through heat exchange between the combustion gas from a steam boiler and the absorbent.

17. The device of claim 16, wherein the other regeneration tower consists of a desorbing zone where carbon dioxide is stripped by spraying the absorbent discharged from the regeneration tower into which the absorbent discharged from the absorption portion is first introduced the discharged absorbent, and a storage zone where the carbon dioxide-stripped absorbent is retrieved and stored; the storage zone being fluidically connected to the absorption portion;
the regeneration portion further comprising a heating boiler fluidically connected to the storage zone and the stripping zone, retrieving and reheating the absorbent discharged from the desorbing zone, supplying the gas containing carbon dioxide to the desorbing zone, and then supplying the absorbent back to the storage zone; and
the heating boiler providing heat exchange between steam produced by the steam boiler and the absorbent retrieved from the stripping zone.
